**Europäisches Patentamt**

**European Patent Office**

**Office européen des brevets**

(11) Veröffentlichungsnummer: **0 116 867**
**A2**

## (12) EUROPÄISCHE PATENTANMELDUNG

(21) Anmeldenummer: **84100609.1**

(22) Anmeldetag: **20.01.84**

(51) Int. Cl.³: **G 06 F 3/023**

(30) Priorität: **24.01.83 DE 3302230**

(43) Veröffentlichungstag der Anmeldung:
**29.08.84 Patentblatt 84/35**

(84) Benannte Vertragsstaaten:
**CH DE FR GB IT LI SE**

(71) Anmelder: **SIEMENS AKTIENGESELLSCHAFT**
**Berlin und München Wittelsbacherplatz 2**
**D-8000 München 2(DE)**

(72) Erfinder: **Kechel, Ottmar, Dipl.-Ing.**
**Pulverturmstrasse 25 C**
**D-8000 München 45(DE)**

(54) Verfahren und Anordnung zum Darstellen von Texten an einer Anzeigeeinheit einer Textstation.

(57) Die Darstellung der Texte erfolgt an einer Anzeigeeinheit (AE), an der jeweils eine vollständige Zeile darstellbar ist. Die jeweilige Schreibstelle wird durch eine Schreibmarke (SM) gekennzeichnet, die durch Steuerglieder (T1, T2), wie sie von Datensichtgeräten bekannt sind, in horizontaler Richtung verschiebbar sind. Zum Darstellen von vorangehenden oder nachfolgenden Zeilen an der Anzeigeeinheit (AE) werden weitere Steuerglieder (T3, T4) verwendet, die denjenigen Steuergliedern bei Datensichtgeräten entsprechen, mit denen die Schreibmarke (SM) in vertikaler Richtung verschiebbar ist.

FIG 2

EP 0 116 867 A2

SIEMENS AKTIENGESELLSCHAFT       Unser Zeichen

Berlin und München               VPA 83 P 1020 E

Verfahren und Anordnung zum Darstellen von Texten an
einer Anzeigeeinheit einer Textstation

Die Erfindung bezieht sich auf ein Verfahren zum Darstellen von Texten an einer Anzeigeeinheit einer Textstation entsprechend dem Oberbegriff des Patentanspruchs 1. Weiterhin bezieht sich die Erfindung auf eine Anordnung zur Durchführung des Verfahrens.

Es ist bereits allgemein bekannt, Textstationen mit einer Anzeigeeinheit zu versehen, an der ein mittels einer Tastatur eingegebener Text dargestellt wird, bevor er mittels eines Druckwerks ausgegeben wird. Als Anzeigeeinheiten sind Bildschirme üblich, an denen eine Vielzahl von Zeilen des Textes darstellbar ist. Es ist auch üblich, die Textstationen mit einer Anzeigeeinheit zu versehen, an der ein Teil einer Zeile oder eine ganze Zeile des Textes darstellbar ist.

Die Darstellung erfolgt häufig in der Weise, daß die Zeichen an einer vorgegebenen, immer gleichen Schreibstelle an der Anzeigeeinheit eingeschrieben werden und nach jedem Eingeben eines neuen Zeichens um eine Zeichenstelle nach links verschoben wird. Es ist auch möglich, die Zeichen entsprechend einer Darstellung des Textes mittels einer Schreibmaschine beginnend vom linken Rand in die Anzeigeeinheit einzuschreiben. In diesem Fall kann eine Schreibmarke vorgesehen sein, die die jeweilige Schreibstelle angibt. Die Schreibmarke kann, entsprechend der Bewegung eines Druckerwagens in einer Schreibmaschine durch das Betätigen der üblicherweise an einer Tastatur vogesehenen Tasten "Zwischenraum" und "Zurücksetzen" in

Ret 1 Fra / 19.1.1982

horizontaler Richtung nach links oder nach rechts verschoben werden. Nach dem Betätigen der Taste "Zwischenraum" werden häufig an den entsprechenden Stellen dargestellte alphanumerische Zeichen durch das Zeichen "Zwischenraum" ersetzt, was einem Löschen von gegebenenfalls vorhandenen alphanumerischen Zeichen entspricht. Besondere Steuerglieder, die ausschließlich zur Steuerung der Bewegung der Schreibmarke dienen, sind üblicherweise nicht vorgesehen.

Zum Darstellen einer Zeile, die einer gerade dargestellten Zeile folgt, wäre es denkbar, diese nach dem Betätigen einer Taste "Neue Zeile" darzustellen. Diejenige Zeile, die der an der Anzeigeeinheit dargestellten Zeile vorangeht, ist üblicherweise bereits ausgedruckt, so daß eine Taste zum Aufrufen dieser Zeile nicht vorgesehen zu werden braucht.

Bei einer Darstellung einer Mehrzahl von Zeilen an einem Bildschirm ist die Schreibmarke nicht nur in horizontaler Richtung sondern auch in vertikaler Richtung verschiebbar, um in einer beliebigen dargestellten Zeile Zeichen adressieren zu können. Zum Positionieren der Schreibmarke sind beispielsweise vier kreuzförmig angeordnete Tasten vorgesehen, die jeweils einer Koordinatenrichtung zugeordnet sind. Es ist auch möglich, zur Positionierung einen Steuerknüppel oder eine Rollkugel zu verwenden, die in die vier Koordinatenrichtungen und gegebenenfalls auch in die dazwischenliegenden Richtungen einstellbar sind und bei deren Betätigung die Schreibmarke in die entsprechende Richtung verschoben wird.

Wenn nun eine Bedienperson mit der Steuerung der Schreibmarke an einem Bildschirm vertraut ist und an einer Textstation eingesetzt werden soll, die nur eine einzeilige Anzeigeeinheit aufweist, ist eine gewisse Einarbeitungs-

0116867

zeit erforderlich, da, wie bereits erwähnt, dort die Steuerung der Schreibmarke in horizontaler Richtung in völlig anderer Weise erfolgt und da in vertikaler Richtung ein Verschieben der Schreibmarke nicht möglich ist.

Der Erfindung liegt daher die Aufgabe zugrunde, ein Verfahren und eine Anordnung zum Darstellen von Texten an einer einzeiligen Anzeigeeinheit einer Textstation anzugeben, bei deren Verwendung hinsichtlich der Bedienung eine große Ähnlichkeit mit einer Darstellung von Texten an einem Bildschirm erreicht wird.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß sehr ähnliche Steuereinheiten und Tastaturen verwendet werden können, unabhängig davon, ob die Anzeige des Textes an einer einzeiligen Anzeige oder an einem Bildschirm mit mehreren Zeilen erfolgt. Durch die Verwendung der weitgehend gleichen Steuereinheiten und Tastaturen kann die Textstation preisgünstig hergestellt werden.

Das Verfahren erweist sich auch dann als zweckmäßig, wenn die Verschiebung der Schreibmarke in horizontaler Richtung und die Verschiebung des in der Anzeigeeinheit dargestellten Textes in vertikaler Richtung mit veränderbarer Geschwindigkeit erfolgt. Es ist auch denkbar, beide Verschiebungen gleichzeitig durchzuführen.

Eine vorteilhafte Ausführungsform einer Anordnung zur Durchführung des Verfahrens enthält einen Textspeicher, in dem eine Mehrzahl von Zeilen des Textes gespeichert ist, einen Anzeigespeicher, in dem die Codewörter der jeweils darzustellenden Zeile zwischengespeichert wird und eine Steuereinheit, die mit einer Schreibmarkensteuerung versehen ist, um die Schreibmarke in horizontaler Richtung an der Anzeigeeinheit zu verschieben und um anstelle einer gerade dargestellten Zeile eine jeweils vorangehende oder nachfolgende Zeile der Anzeigeeinheit darzustellen, wenn entsprechende Steuerglieder betätigt werden.

Die Steuerglieder können als kreuzförmig angeordnete Tasten ausgebildet sein, wobei beim Betätigen der horizontal angeordneten Tasten eine Verschiebung der Schreibmarke in horizontaler Richtung erfolgt und wobei beim Betätigen der vertikal angeordneten Tasten der jeweilige Inhalt der Anzeigeeinheit durch eine jeweils vorangehende bzw. nachfolgende Zeile ersetzt wird. Die Steuerglieder können auch als ein Steuerknüppel oder als eine Rollkugel ausgebildet sein, die in die entsprechenden Koordinatenrichtungen und gegebenenfalls auch in die dazwischenliegenden Richtungen schwenkbar sind. Es kann auch ein weiteres Steuerglied vorgesehen sein, nach dessen Betätigung die Verschiebung der Schreibmarke bzw. des Textes mit erhöhter Geschwindigkeit erfolgt.

Im folgenden werden das Verfahren gemäß der Erfindung und ein Ausführungsbeispiel einer Anordnung zur Durchführung des Verfahrens anhand von Zeichnungen näher erläutert. Es zeigen

Fig. 1 eine Darstellung einer Anzeigeeinheit und mehrerer Zeilen eines Textes,

Fig. 2 ein Blockschaltbild einer Anordnung zur Durchführung des Verfahrens.

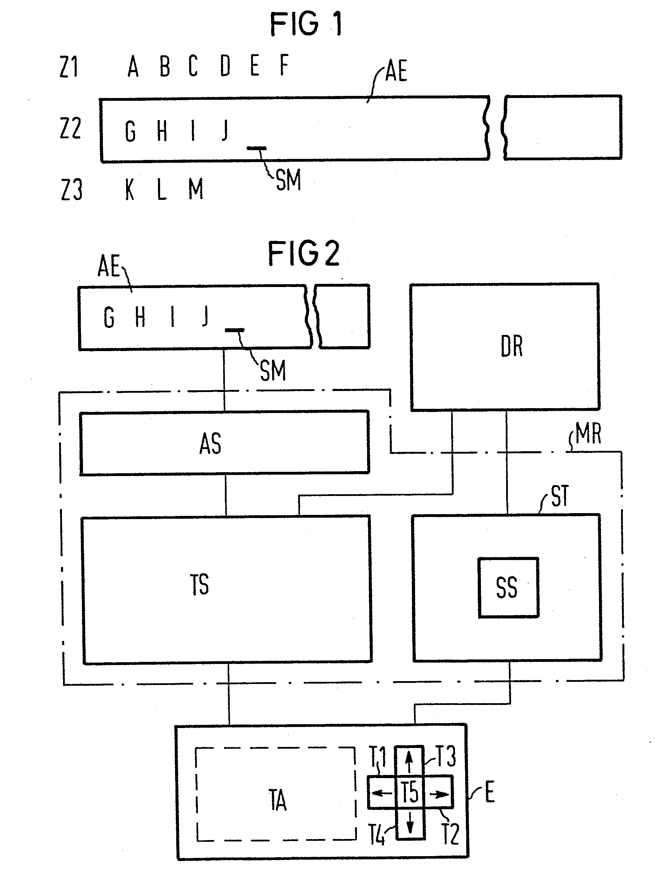

Bei der Darstellung in Fig. 1 wird angenommen, daß in einem Textspeicher ein aus den Buchstaben A bis M bestehender Text gespeichert ist. Dieser Text ist in drei Zei-

0116867

len Z1 bis Z3 angeordnet. Der Text der Zeile Z2, der aus den Buchstaben G bis J gebildet wird, wird gerade in einer Anzeigeeinheit AE dargestellt und beispielsweise korrigiert. Eine die Schreibstelle kennzeichnende Schreibmarke SM befindet sich hinter dem Buchstaben J und wird mit jeder Eingabe eines weiteren Buchstabens selbsttätig um eine Schreibstelle nach rechts verschoben. Beim Betätigen einer Taste "Wagenrücklauf" oder "Neue Zeile" wird in der Anzeigeeinheit nicht mehr die Zeile Z2, sondern die aus den Buchstaben K bis M gebildete Zeile Z3 dargestellt. Die Schreibmarke SM befindet sich dann unter dem Buchstaben K.

Die Schreibmarke SM kann nicht nur mit Hilfe der Taste "Zwischenraum" oder einer Taste "Zurücksetzen" in horizontaler Richtung positioniert werden, sondern es sind weitere Steuerglieder vorgesehen, die eine Bewegung der Schreibmarke SM entsprechend der Bewegung an einem Datensichtgerät ermöglichen, bei dem eine Mehrzahl von Zeilen an einem Bildschirm dargestellt ist. Diese Steuerglieder sind beispielsweise aus mindestens vier Tasten gebildet, die kreuzförmig angeordnet sind. Die in horizontaler Richtung angeordneten Tasten ermöglichen eine Bewegung der Schreibmarke SM nach links oder rechts und sind normalerweise mit entsprechenden Pfeilen beschriftet. Eine Vertikalbewegung der Schreibmarke SM ist jedoch bei einer einzeiligen Anzeigeeinheit AE nicht möglich. Bei dem Verfahren wird daher vorgesehen, daß beim Betätigen einer der beiden vertikalen Tasten, die ebenfalls mit entsprechenden Pfeilen beschriftet sein können, nicht die Schreibmarke SM bewegt wird, sondern daß die jeweils vorhergehende bzw. nachfolgende Zeile Z1 bzw. Z3 an der Anzeigeeinheit AE dargestellt wird. Wenn die obere Taste betätigt wird, die einen nach oben zeigenden Pfeil aufweist, wird der darzustellende Text nach unten verschoben, so daß anstelle der Zeile Z2 die Zeile Z1 dargestellt wird.

0116867

In entsprechender Weise wird beim Betätigen der unteren Taste, die einen nach unten zeigenden Pfeil aufweist, der Text nach oben verschoben, so daß anstelle der Zeile Z2 die Zeile Z3 dargestellt wird. Bei einer Dauerbetätigung dieser Tasten werden aufeinanderfolgend vorangehende bzw. nachfolgende Zeilen dargestellt, so daß der Text unter der Anzeigeeinheit AE "hindurchgerollt" wird. In entsprechender Weise wird bei einer Dauerbetätigung der horizontal angeordneten Tasten die Schreibmarke SM über mehrere Zeichenplätze hinweg in horizontaler Richtung bewegt. Die Verschiebung der Schreibmarke SM bzw. des Textes kann mit unterschiedlicher Geschwindigkeit erfolgen.

Anstelle der Tasten kann auch ein Steuerknüppel oder eine Rollkugel vorgesehen sein, die sich in die vier Koordinatenrichtungen und gegebenenfalls auch in dazwischenliegende Richtungen bewegen lassen.

Bei der in Fig. 2 dargestellten Anordnung ist der Text in einem Textspeicher TS gespeichert. Der Text kann eine oder mehrere Seiten umfassen. Er wird mit Hilfe einer Eingabeeinheit E eingegeben, die vorzugsweise als Tastatur ausgebildet ist. Die Eingabeeinheit E kann auch einen Speicher oder einen Empfänger zum Empfangen von übertragenen Texten enthalten. Die Eingabe des Textes erfolgt unter Verwendung von Tasten TA, die als alphanumerische Tasten und als Steuertasten ausgebildet sind. Die Eingabe, sowie alle weiteren durchzuführenden Funktionen werden durch eine Steuereinheit ST gesteuert. Dem Textspeicher TS ist ein Anzeigespeicher AS nachgeschaltet, in dem jeweils der an der Anzeigeeinheit AE darzustellende Text einer Zeile zwischenspeicherbar ist. Der Anzeigespeicher AS und der Textspeicher TS können physikalisch in einem gemeinsamen Speicher realisiert sein, der seinerseits zusammen mit der Steuereinheit ST einen Mikrorechner MR bildet. Ein Drucker DR kann am Anzeigespeicher AS oder am Textspeicher TS sowie an der Steuereinheit ST angeschlossen sein, um die gespeicherten Texte in bekannter Weise auszudrukken.

Zur Steuerung der Schreibmarke SM an der Anzeigeeinheit AE in horizontaler Richtung und zum Verschieben des dargestellten Textes sind an der Tastatur die Steuerglieder T1 bis T4 vorgesehen, die bei der dargestellten Ausführungsform als Tasten ausgebildet sind, die mit in die vier Koordinatenrichtungen weisenden Pfeilen gekennzeichnet sind. Beim kurzzeitigen Betätigen der Taste T1 bzw. T2 wird die Schreibmarke SM zeichenweise nach links bzw. nach rechts verschoben. Die Zeichen des Textes werden dabei, im Gegensatz zu der Verschiebung mittels der Taste "Zwischenraum" nicht verändert. Bei einer Dauerbetätigung der Taste T1 bzw. T2 wird die Schreibmarke SM um eine entsprechende Mehrzahl von Zeichenplätzen nach links bzw. nach rechts verschoben.

Bei einem Betätigen der Taste T3 bzw. T4 wird die Position der Schreibmarke SM nicht verändert. Stattdessen wird der Text nach unten bzw. nach oben verschoben. Bei einem kurzzeitigen Betätigen der Taste T3 bzw. T4 wird jeweils nur eine vorangehende bzw. nachfolgende Zeile angezeigt und bei einer Dauerbetätigung werden entsprechend mehrere vorangehende bzw. nachfolgende Zeilen zeitlich nacheinander angezeigt.

In der Mitte dieser kreuzförmig angeordneten Tasten T1 bis T4 (Cursorkreuz) kann eine weitere Taste T5 vorgesehen sein, bei deren Betätigung die Geschwindigkeit der Verschiebung der Schreibmarke SM oder des Textes während der Dauerbetätigung der Tasten erhöht werden kann. Diese Taste T5 kann auch vorgesehen sein, um durch einen einzigen Tastendruck auf den Anfang eines Textes zurückspringen zu können.

Die Verschiebung der Schreibmarke SM und des Textes können auch gleichzeitig durchgeführt werden, in dem beispielsweise zwei benachbarte Tasten, beispielsweise T1 und T3 gleichzeitig betätigt werden. Dies entspricht bei einer Verwendung eines Steuerknüppels oder einer Rollkugel einem Schwenken in eine in der Mitte zwischen den beiden Koordinatenrichtungen liegende Richtung.

Die Verschiebung der Schreibmarke SM und des Textes erfolgt unter Verwendung einer Schreibmarkensteuerung SS, die Bestandteil der Steuereinheit ST ist und ebenfalls innerhalb des Mikrorechners MR durch entsprechende Programmierung realisiert ist. Diese Schreibmarkensteuerung SS entspricht hinsichtlich der Verschiebung der Schreibmarke einer von Datensichtgeräten her bekannten Schreibmarkensteuerung. Für die Verschiebung des Textes ist die Schreibmarkensteuerung SS derart ausgebildet, daß in diesem Fall ein Umladen des Speicherinhalts des Anzeigespeichers AS stattfindet und vom Textspeicher TS die jeweils vorangehende bzw. nachfolgende Zeile in den Anzeigespeicher AS eingespeichert wird.

7 Patentansprüche
2 Figuren

<u>Patentansprüche</u>

1. Verfahren zum Darstellen von Texten an einer Anzeigeeinheit einer Textstation, bei der die Texte mittels einer Eingabeeinheit eingegeben werden, bei der die Texte in einem Textspeicher gespeichert werden, bei der jeweils eine vollständige Zeile des Textes an der Anzeigeeinheit darstellbar ist und bei der die jeweilige Schreibstelle an der Anzeigeeinheit durch eine Schreibmarke markiert wird, die beim Eingeben der Zeichen der Zeile selbsttätig in Schreibrichtung verschoben wird, d a d u r c h  g e - k e n n z e i c h n e t , daß beim Betätigen von Steuergliedern (T1 bis T4) einerseits die Schreibmarke (SM) in jeweils einer der beiden horizontalen Richtungen verschiebbar ist und andererseits an der Anzeigeeinheit (AE) jeweils eine vorangehende Zeile (Z1) oder eine nachfolgende Zeile (Z2) des Textes darstellbar ist.

2. Verfahren nach Anspruch 1, d a d u r c h  g e - k e n n z e i c h n e t , daß die Verschiebung der Schreibmarke (SM) bzw. die Anzeige der jeweils vorangehenden Zeile (Z1) bzw. der nachfolgenden Zeile (Z2) mit einer veränderbaren Geschwindigkeit erfolgt.

3. Verfahren nach Anspruch 1 oder Anspruch 2, d a - d u r c h  g e k e n n z e i c h n e t , daß die Ver-schiebung der Schreibmarke (SM) in einer der beiden horizontalen Richtungen und die Anzeige der vorangehenden Zeile (Z1) bzw. der nachfolgenden Zeile (Z3) gleichzeitig erfolgt.

4. Anordnung zur Durchführung des Verfahrens nach Anspruch 1 mit einer Eingabeeinheit, mittels der der Text eingebbar ist, mit einem Textspeicher, in dem der Text gespeichert ist, mit einem Anzeigespeicher, in dem die jeweils darzustellende Zeile zwischenspeicherbar ist und mit einer Steuereinheit, die den zeitlichen Ablauf von Funktionen der Textstation steuert, d a d u r c h   g e - k e n n z e i c h n e t ,   daß eine Schreibmarkensteue- rung (SS) vorgesehen ist, die mit den Steuergliedern (T1 bis T4) verbunden ist und die die Verschiebung der Schreibmarke (SM) in einer der beiden horizontalen Richtungen und die Darstellung der jeweils vorangehenden Zeile (Z1) bzw. der jeweils nachfolgenden Zeile (Z3) an der Anzeigeeinheit (AE) steuert.

5. Anordnung nach Anspruch 4, d a d u r c h   g e - k e n n z e i c h n e t ,   daß die Steuerglieder (T1 bis T4) aus vier kreuzförmig angeordneten Tasten (T1 bis T4) gebildet werden, die jeweils einer Richtung der Verschiebung der Schreibmarke (SM) bzw. der Anzeige der vorangehenden Zeile (Z1) bzw. der nachfolgenden Zeile (Z3) zugeordnet sind.

6. Anordnung nach Anspruch 4, d a d u r c h   g e - k e n n z e i c h n e t ,   daß die Steuerglieder (T1 bis T4) als Steuerknüppel oder Rollkugel ausgebildet sind, die in mindestens vier Richtungen verstellbar sind.

7. Anordnung nach einem der Ansprüche 4 bis 6, d a - d u r c h   g e k e n n z e i c h n e t ,   daß ein wei- teres Steuerglied (T5) vorgesehen ist, nach dessen Betätigung bei einer Dauerbetätigung der Steuerglieder (T1 bis T4) die Verschiebung der Schreibmarke (SM) über eine Mehrzahl von Zeichenplätzen bzw. die aufeinanderfolgende Anzeige einer Mehrzahl von vorangehenden Zeilen (Z1) bzw. nachfolgenden Zeilen (Z3) mit erhöhter Geschwindigkeit durchführbar ist.

## FIG 1

Z1   A  B  C  D  E  F            AE

Z2   | G  H  I  J  ___ |    {  }

Z3   K  L  M            SM

## FIG 2

AE

| G  H  I  J  ___ |  {  }      DR

SM

AS                              MR

ST

TS                 SS

TA   T1 ↑ T3
     ← T5 → E
     T4 ↓ T2